# EUROPEAN PATENT SPECIFICATION

(11) **EP 3 994 996 B1**
(45) Date of publication and mention of the grant of the patent: **20.08.2025**
(21) Application number: 20206672.6
(22) Date of filing: 10.11.2020
(51) Int. Cl.: A21C 11/10

(54) **DEVICE FOR CUTTING A DOUGH SHEET ON A SUBSTRATE, IN PARTICULAR A CONVEYOR**
VORRICHTUNG ZUM SCHNEIDEN EINES TEIGBANDES AUF EINEM SUBSTRAT, INSBESONDERE EINEM FÖRDERER
DISPOSITIF DE COUPE D'UNE FEUILLE DE PATE SUR UN SUBSTRAT, NOTAMMENT UN CONVOYEUR

(43) Date of publication of application: 11.05.2022
(73) Proprietor: Radie B.V., 4104 BC Culemborg (NL)
(72) Inventor: VAN BLOKLAND, Johannes, Josephus, Antonius, 4104 BC Culemborg (NL)
(74) Representative: IP Maison

(56) References cited:
- WO-A1-2005/005709
- WO-A1-2018/071950
- JP-A- H0 494 658
- JP-A- S59 130 123
- JP-A- S63 313 538
- JP-B2- 4 888 691
- JP-U- S5 118 399
- KR-U- 20110 008 165
- US-A- 1 021 896
- US-A- 3 286 573
- US-A- 4 606 126
- US-A1- 2012 079 933
- US-A1- 2016 143 297
- TESCOMAVIDEO EN: "Pastry crimper TESCOMA DELÍCIA", 26 February 2014 (2014-02-26), XP093045562, Retrieved from the Internet <URL:https://www.youtube.com/watch?v=zaIdhvGB4mI> [retrieved on 20230510]
- TESCOMAVIDEO EN: "Pastry wheel DELÍCIA, 4 cutters", 29 September 2015 (2015-09-29), XP093045581, Retrieved from the Internet <URL:https://www.youtube.com/watch?v=unWo_eievlY> [retrieved on 20230510]

## Description

The present invention relates to a device for cutting a dough sheet on a substrate, in particular a conveyor.

Devices for this purpose are well known in the art. When the dough is cut while being transported, rotating knives or cutting wheels may be used for making a cut in the transport direction, and a stationary chopper may be used for making a cut perpendicular to the transport direction. For creating more complex shaped cuts, a cutting roller with predetermined cutting shape, such as a triangle or trapezoid for creating a croissant, may be applied. When the dough is cut while it is stationary, a cutting wheel may be moved with respect to the dough sheet.

Alternatively, jet knives may be used in various cases, but these require specific circumstances and precautions in order to drain the cutting fluid.

However, also the cutting wheels according to the state of the art have disadvantages. Besides being unsuitable for cutting patterns with sharp edges, they tend to smear the dough, which results in undesired effects and irregularities in the dough products once baked.

Documents JP4888691 B2, US2016/143297 A1, WO2005/005709 A1, US3286573 A disclose dough cutting devices according to the prior art.

It is a goal of the present invention to take away at least part of the above disadvantages, and/or to provide a useful alternative to the state of the art.

The invention is a device according to claim 1 and a method according to claim 10.

Hereafter is disclosed
a device for cutting a dough sheet on a substrate, in particular a conveyor, comprising a conveyor belt, for transporting the dough sheet in a transport direction, at least one cutting wheel, suspended above the conveyor belt, such that the circumference of the wheel touches a transporting surface of the conveyor belt, wherein the wheel has a diameter and a horizontal axis of rotation, which horizontal axis of rotation is beared in the suspension. and wherein the diameter of the wheel is less than 40 mm, more preferably less than 30 mm, and even more preferably less than 20 mm.

The actual size of the cutting wheel is chosen in dependency of the thickness of the dough sheet to be cut. With a given sheet thickness, the angle under which the dough is engaged by the cutting wheel depends on the diameter of the wheel. The inventors have found that when this angle is at least 35 degrees, but more preferably at least 45 degrees, a sharper cut with less damage and irregularities to the edges of the dough is obtained. It has also appeared that this goes for an angle with a maximum of 85 degrees, but more preferably a maximum of 75 degrees.

Is has also been determined that the vertical speed-component of the cutting operation that is relatively high when compared to a wheel with a larger diameter, contributes to a sharper cut.

In a preferred embodiment, a distance from the touching point of the wheel with the conveyor belt to the closest point of the suspension is at least half of the diameter of the cutting wheel minus 2 mm. This means, the bearing surrounds the horizontal axis of rotation of the wheel over only a very small distance, allowing the main part of the cutting wheel to submerge under the dough level of the sheet to be cut.

A thickness of the blade of the wheel will normally be between 1,5 and 2,5 mm, and in particular 2 mm, and an angle of the blade in cross section between 10 and 20 degrees, and in particular about 15 degrees.

The cutting wheel may be passively driven, that is, rotatable by means of friction with the conveyor belt in a transport direction. It has appeared in practice, that actively driving the wheel is not necessary, even if it is almost half under dough level.

The device according to the invention may further comprise a quick-release mechanism for exchanging the wheel, in particular for adapting the diameter of the wheel to the thickness of a dough sheet to be cut. Quick release in the sense of the present invention means that it can be released, or exchanged without any tools required.

In order to enable the cutting wheel to change directions, the cutting wheel is suspended rotatable about a vertical axis of rotation perpendicular to the transporting surface of the conveyor belt. As a result, the wheel can follow and cut any direction in the plane of the substrate and/or with respect to a direction of movement of the dough.

According to the invention, the horizontal axis of rotation and the vertical axis of rotation cross each other and hence do not cut each other. Additionally, the vertical axis of rotation is preferably in the plane of the wheel.

That means, the axis of rotation that determines the direction leads or lags the wheel when rotating. This makes the cutting wheel "automatically follow" the suspension, in the way a shopping cart wheel does.

In a further embodiment, the cutting wheel is suspended tensioned, that is, with a tension toward the substrate. The tension may normally be a spring-tension, which is preferably adjustable.

The suspension may comprise a leg, extending between the horizontal and the vertical axis of rotation and the spring tension may be applied between the leg and a part of the suspension corresponding with the vertical axis.

The invention will now be elucidated with reference to the following figures. Herein:
- Figure 1 shows a side view of a prior art cutting wheel cutting dough;
- Figure 2 shows a cross section of a prior art cutting wheel cutting dough;
- Figure 3 shows a side view of a cutting wheel according to the invention cutting dough;
- Figure 4 shows a cross section of a cutting wheel according to the invention cutting dough;
- Figure 5 shows a side view of a suspension according to the invention;
- Figure 6 shows a schematic detailed view of a path followed by a cutting wheel according the invention;
- Figure 7 shows a top view of a pattern that can be cut with a device according to the present invention; and
- Figure 8 shows a suspension according to an embodiment of the present invention.

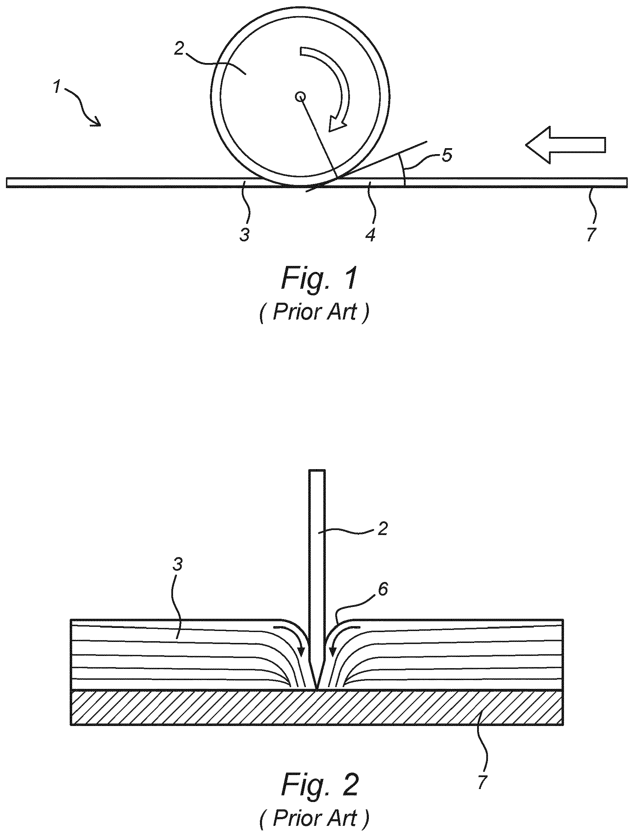

Figure 1 shows a side view 1 of a prior art cutting wheel 2 cutting dough 3. The cutting wheel has a diameter of about 80 mm. With a given thickness 4 of the dough sheet, which may in this example be for instance 2 mm, the angle 5 is about 20 degrees.

Figure 2 shows a cross section of the configuration from figure 1. Visible is that the cut made in the dough is rounded at its upper side 6, instead of being sharp. This is the result of the topside of the dough being pressed along the cutting edge. In particular when the dough type comprises multiple layers, such as puff pastry for baking for instance croissants, this is found very disadvantageous. The cutting wheel exactly touches the substrate 7.

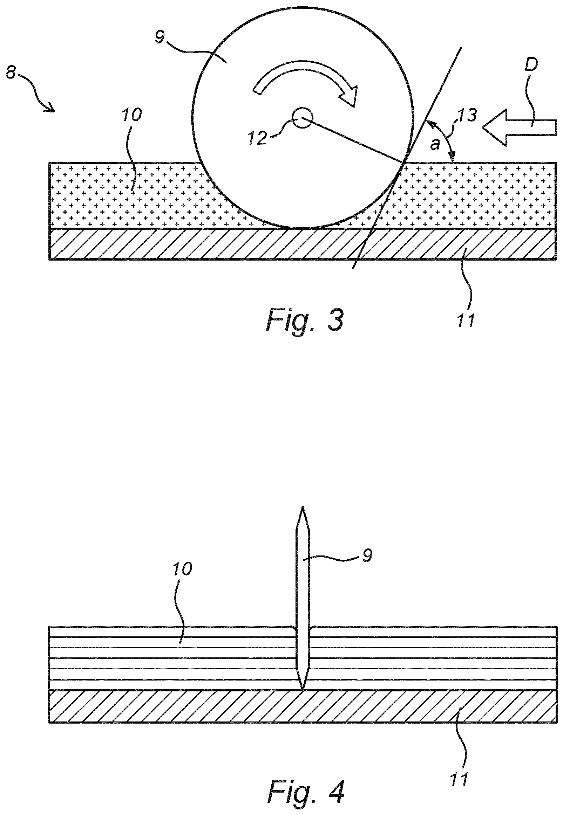

Figure 3 shows a side view 8 of a cutting wheel 9 according to the invention, cutting dough 10. The device comprises a conveyor belt 11, for transporting the dough sheet in a transport direction D, at least one cutting wheel 9, suspended above the conveyor belt, such that the circumference of the wheel touches a transporting surface of the conveyor belt 11, wherein the wheel has a diameter and a horizontal axis of rotation, which horizontal axis of rotation is beared 12 in the suspension.

In this figure the dough sheet is 8 mm, and the cutting wheel has a diameter of 30 mm. As a result, the cutting angle 13 is 65 degrees. Keeping the cutting angle, that is, the angle under which the cutting wheel first touches the dough, within a certain interval, preferably between 45 and 75 degrees is the general purpose of the invention. Since the angle is the result of both the diameter of the wheel and the dough thickness, it is beneficial when the cutting wheel can be easily exchanged. A size of wheel that matches the dough sheet thickness can then be selected.

Figure 4 shows a cross section of the cutting wheel from figure 3. The figure shows that increasing the angle of cutting has proved to reduce the amount of the topside dough that is pulled in by the cutting device substantially. Typically a cutting angle greater than 45 degrees result in sharp edged cuts. Depending on dough type however, the cutting angle limit is about 75 degrees. At this point the forward pushing force of the rotating cutting device may induce congestion in front of the top of the dough sheet.

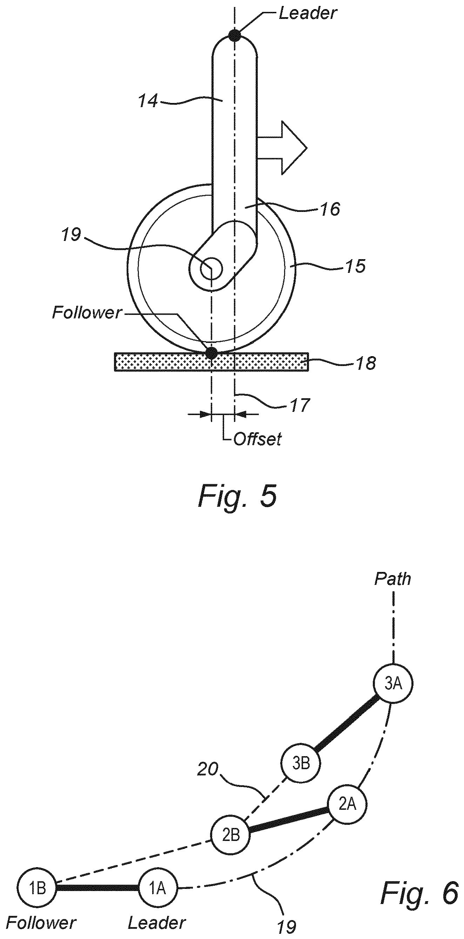

Figure 5 shows a side view of a suspension 14 according to the invention, wherein the cutting wheel 15 is further suspended 16 rotatable about a vertical axis of rotation 17 perpendicular to the transporting surface 18 of the conveyor belt 18. The horizontal axis of rotation 19 and the vertical axis of rotation 17 cross each other and hence do not cut each other. As a (desired) effect, the cutting wheel follows the direction of the suspension, so it allows to create curved paths, as depicted in figure 6. Also for this aspect of the invention, a small wheel diameter is desired.

The cutting wheel is preferably suspended pre-tensioned, or with a (bias) force in the direction of the conveyor belt. The tension or force may be adjustable. The tension may for instance be generated by a spring, a weight, or by a pair of magnets that are oriented in such way that they repel each other.

The suspension may comprise a leg, extending between the horizontal and the vertical axis of rotation and the spring tension may be applied between the leg and a part of the suspension corresponding with the vertical axis. Alternatively, the leg may be coupled rigidly to the vertical axis, and the pre-tension or force may act on the vertical axis of rotation.

Figure 6 shows a schematic detailed view of a path 19 followed by a cutting wheel according to the invention, wherein it is visible that the actual cutting point follows the suspension, taking a shortcut 20. A controller for the device according to the invention may take this effect into account.

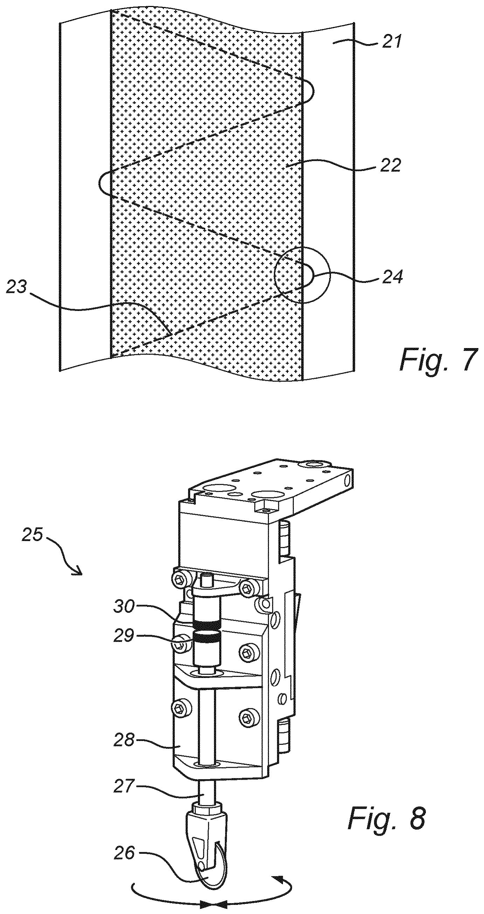

Figure 7 shows a top view of a pattern that can be cut in a dough sheet 22 on a conveyor 21 with a device according to the present invention. In the figure, the cuts 23 are straight lines, but the cutting wheel is re-oriented fastly once it leaves the dough sheet, for making a U-turn 24 and then cutting the dough sheet diagonally in opposite direction. This is made possible by the small diameter of the cutting wheel itself.

Figure 8 shows an example of a device, for cutting a dough sheet on a substrate (not shown), with a cutting wheel 26, suspended above the substrate, such that the circumference of the wheel touches the substrate, wherein the wheel is suspended rotatably about a vertical axis of rotation, wherein the wheel is carried by a shaft 27 rotatable about the vertical axis with respect to a housing 28 in which it is beared, wherein the shaft is provided with a first magnet 29 and the housing is provided with a second magnet 30, positioned opposite to the first magnet 29 and wherein both magnets 29, 30 are oriented such that they repel each other, that is, with either both their north poles facing each other or with both their south poles facing each other. This suspension has the benefit over a construction with springs that a rotation of the cutting wheel about its vertical axis of rotation has the least possible friction. The features of this embodiment can be combined with any other feature mentioned in this application.

A suspension, in particular for a cutting wheel, comprising a first part and a second part that are rotatably connected to each other about an axis of rotation, and translatable parallel to the axis of rotation, wherein the first part and the second part each comprise a magnet, wherein the magnets are oriented with the repelling poles toward each other may be applied in embodiments of the invention.

## Claims

1. Device for cutting a dough (10) sheet on a substrate, in particular a conveyor, comprising:
- a conveyor belt (11), for transporting the dough (10) sheet in a transport direction;
- at least one cutting wheel (9, 15, 26), suspended above the conveyor belt (11), such that the circumference of the wheel (9, 15, 26) touches a transporting surface of the conveyor belt (11);
wherein
- the wheel (9, 15, 26) has a diameter and a horizontal axis of rotation, which horizontal axis of rotation is beared (12) in a suspension (14); and **characterized in that**
- the diameter of the wheel (9, 15, 26) is less than 40 mm, more preferably less than 30 mm, and even more preferably less than 20 mm, **in that** the cutting wheel (9, 15, 26) is further suspended rotatable about a vertical axis of rotation perpendicular to the transporting surface of the conveyor belt (11), wherein the horizontal axis of rotation and the vertical axis of rotation cross each other and hence do not cut each other, such that the cutting wheel (9, 15, 26) is enabled to change directions and to cut any direction in the plane of the substrate and/or with respect to a direction of movement of the dough (10).

2. Device according to claim 1, wherein the vertical axis of rotation is in the plane of the wheel and wherein the axis of rotation that determines the direction leads or lags the wheel (9, 15, 26) when rotating such that the cutting wheel (9, 15, 26) automatically follows the suspension (14).

3. Device according to claim 1 or 2, wherein a distance from the touching point of the wheel (9, 15, 26) with the conveyor belt (11) to the closest point of the suspension (14) is at least half of the diameter of the cutting wheel (9, 15, 26) minus 2 mm.

4. Device according to any of the preceding claims, wherein the cutting wheel (9, 15, 26) is passively driven, that is, rotatable by means of friction from the conveyor belt (11) in a transport direction.

5. Device according to any of the preceding claims, comprising quick-release mechanism for exchanging the wheel (9, 15, 26), in particular for adapting the diameter of the wheel (9, 15, 26) to the thickness of a dough (10) sheet to be cut.

6. Device according to any of the preceding claims, wherein the cutting wheel (9, 15, 26) is suspended pre-tensioned.

7. Device according to claim 6, wherein the tension is adjustable.

8. Device according to any of the preceding claims, wherein the suspension (14) comprises a leg, extending between the horizontal and the vertical axis of rotation.

9. Device according to claim 6 and 8, wherein the spring tension is applied between the leg and a part of the suspension (14) corresponding with the vertical axis.

10. Method for cutting a dough (10) sheet on a substrate with a device according to any of the preceding claims, in particular a conveyor, comprising:
- Providing a dough (10) on a substrate;
- Cutting the dough (10) by means of a cutting wheel (9, 15, 26);
Wherein
- The diameter of the cutting wheel (9, 15, 26) is chosen such that the angle under which the dough (10) is engaged by the cutting wheel (9, 15, 26) is at least 35 degrees, but more preferably at least 45 degrees.

11. Method according to claim 10, wherein the angle is less than 85 degrees, and more preferably less than 75 degrees.

12. Method according to claim 10 or 11, wherein the diameter of the wheel (9, 15, 26) is less than 40 mm, more preferably less than 30 mm, and even more preferably less than 20 mm.

## Patentansprüche

1. Vorrichtung zum Schneiden eines Teigbandes (10) auf einem Substrat, insbesondere einem Förderer, aufweisend:
- ein Förderband (11) zum Transportieren des Teigbandes (10) in einer Transportrichtung;
- zumindest ein Schneidrad (9, 15, 26), das oberhalb des Förderbands (11) aufgehängt ist derart, dass ein Umfang des Rads (9, 15, 26) eine Transportoberfläche des Förderbands (11) berührt;
wobei
- das Rad (9, 15, 26) einen Durchmesser sowie eine horizontale Drehachse aufweist, wobei die horizontale Drehachse in einer Aufhängung (14) gelagert (12) ist;
und **dadurch gekennzeichnet, dass**
- der Durchmesser des Rades (9, 15, 26) weniger als 40 mm beträgt, vorzugsweise weniger als 30 mm und noch weiter vorzugsweise weniger als 20 mm, dass das Schneidrad (9, 15, 26) ferner um eine vertikale Drehachse drehbar aufgehängt ist, die zur Transportoberfläche des Förderbands (11) senkrecht steht, wobei sich die horizontale Drehachse und die vertikale Drehachse miteinander kreuzen und sich so nicht schneiden, sodass das Schneidrad (9, 15, 26) in die Lage versetzt ist, die Richtung zu ändern und in jeder Richtung in der Ebene des Substrats und/oder bezüglich einer Bewegungsrichtung des Teigs (10) zu schneiden.

2. Vorrichtung gemäß Anspruch 1, bei der sich die vertikale Drehachse in der Ebene des Rads befindet und wobei die Drehachse, die die Richtung bestimmt, das Rad (9, 15, 26) beim Drehen führt oder nachlaufen lässt, wenn eine Drehung erfolgt, derart, dass das Schneidrad (9, 15, 26) von selbst der Aufhängung (14) folgt.

3. Vorrichtung gemäß Anspruch 1 oder 2, wobei ein Abstand vom Berührpunkt des Rades (9, 15, 26) mit dem Förderband (11) zum nächstliegenden Punkt der Aufhängung (14) zumindest die Hälfte des Durchmessers des Schneidrads (9, 15, 26) minus 2 mm beträgt.

4. Vorrichtung gemäß einem der vorhergehenden Ansprüche, wobei das Schneidrad (9, 15, 26) passiv angetrieben ist, nämlich mittels Reibung von dem Förderband (11) in einer Transportrichtung drehbar.

5. Vorrichtung gemäß einem der vorhergehenden Ansprüche, aufweisend einen Schnelllösemechanismus zum Austauschen des Rades (9, 15, 26), insbesondere zum Anpassen des Durchmessers des Rades (9, 15, 26) an die Dicke eines zu schneidenden Teigbandes (10).

6. Vorrichtung gemäß einem der vorhergehenden Ansprüche, wobei das Schneidrad (9, 15, 26) vorgespannt aufgehängt ist.

7. Vorrichtung gemäß Anspruch 6, wobei die Spannung einstellbar ist.

8. Vorrichtung gemäß einem der vorhergehenden Ansprüche, wobei die Aufhängung (14) ein Bein aufweist, das sich zwischen der horizontalen und der vertikalen Drehachse erstreckt.

9. Vorrichtung gemäß Anspruch 6 und 8, wobei die Federspannung zwischen dem Bein und einem Teil der Aufhängung (14), der der vertikalen Achse entspricht, angelegt ist.

10. Verfahren zum Schneiden eines Teigbandes (10) auf einem Substrat mit einer Vorrichtung gemäß einem der vorhergehenden Ansprüche, insbesondere auf einem Förderer, aufweisend:
- Bereitstellen eines Teiges (10) auf einem Substrat;
- Schneiden des Teiges (10) mit einem Schneidrad (9, 15, 26);
wobei
- der Durchmesser des Schneidrads (9, 15, 26) so gewählt ist, dass der Winkel, unter dem in den Teig (10) durch das Schneidrad (9, 15, 26) eingegriffen wird, zumindest 35 Grad, aber vorzugsweise zumindest 45 Grad beträgt.

11. Verfahren gemäß Anspruch 10, wobei der Winkel weniger als 85 Grad und vorzugsweise weniger als 75 Grad beträgt.

12. Verfahren gemäß Anspruch 10 oder 11, wobei der Durchmesser des Rades (9, 15, 26) weniger als 40 mm, vorzugsweise weniger als 30 mm und noch weiter vorzugsweise weniger als 20 mm beträgt.

## Revendications

1. Dispositif pour couper une feuille de pâte (10) sur un substrat, en particulier une courroie transporteuse, comprenant :
- Une courroie transporteuse (11) pour transporter la feuille de pâte (10) dans une direction de transport; et
- Au moins une roue de coupe (9, 15, 26) agencée au-dessus de la courroie transporteuse (11), de sorte que la circonférence de la roue (9, 15, 26) touche une surface de transport de la courroie transporteuse (11),
dans lequel :
- La roue (9,15,26) a un diamètre et un axe de rotation horizontal, lequel axe de rotation horizontal est supporté (12) dans la suspension (14) ; et
- Le diamètre de la roue (9,15, 26) est inférieur à 40 mm, de préférence inférieur à 30 mm et, encore plus préférablement, inférieur à 20 mm,
**caractérisé en ce que** la roue de coupe (9,15,26) est en outre agencée de manière rotative autour d'un axe de rotation vertical perpendiculaire à la surface de transport de la courroie transporteuse (11), dans lequel l'axe de rotation horizontal et l'axe de rotation vertical se croisent et ne se coupent donc pas, de sorte que la roue de coupe (9,15,26) est capable de changer de direction et de couper dans n'importe quelle direction dans le plan du substrat et/ou par rapport à une direction de mouvement de la feuille de pâte (10).

2. Dispositif selon la revendication 1, dans lequel l'axe de rotation qui détermine la direction précède ou suit la roue (9,15,26) lors de la rotation de sorte que la roue de coupe (9,15,26) suit automatiquement la suspension (14).

3. Dispositif selon la revendication 1 ou 2, dans lequel une distance du point de contact de la roue (9,15,26) avec la courroie transporteuse (11) au point le plus proche de la suspension (14) est au moins la moitié du diamètre de la roue de coupe (9,15,26) moins 2 mm.

4. Dispositif selon l'une quelconque des revendications précédentes, dans lequel la roue de coupe (9,15,26) est entraînée passivement, c'est-à-dire rotative au moyen de la friction de la courroie transporteuse (11) dans une direction de transport.

5. Dispositif selon l'une quelconque des revendications précédentes, comprenant un mécanisme de décrochage rapide pour remplacer la roue (9,15,26), en particulier par une autre roue ayant un diamètre adapté à l'épaisseur de la feuille de pâte (10) à couper.

6. Dispositif selon l'une quelconque des revendications précédentes, dans lequel la roue de coupe (9,15,26) est agencée pour assurer une tension préalable.

7. Dispositif selon la revendication 6, dans lequel la tension préalable est ajustable.

8. Dispositif selon l'une quelconque des revendications précédentes, dans lequel la suspension (14) comprend une tige s'étendant entre l'axe horizontal et l'axe vertical de rotation.

9. Dispositif selon les revendications 6 et 8, dans lequel la tension préalable est appliquée entre la tige et une partie de la suspension (14) correspondant à l'axe vertical.

10. Procédé pour couper une feuille de pâte (10) sur un substrat avec un dispositif selon l'une quelconque des revendications précédentes, en particulier une courroie transporteuse, comprenant les étapes consistant à :
- Fournir la feuille de pâte (10) sur le substrat ; et
- Couper la feuille de pâte (10) au moyen d'une roue de coupe (9,15,26),
dans lequel le diamètre de la roue de coupe (9,15,26) est déterminé de sorte que l'angle, sous lequel la feuille de pâte (10) est engagée par la roue de coupe (9,15,26), est égal à au moins 35 degrés et, préférablement, au moins 45 degrés.

11. Procédé selon la revendication 10, dans lequel l'angle est inférieur à 85 degrés et, préférablement, inférieur à 75 degrés.

12. Procédé selon la revendication 10 ou 11, dans lequel le diamètre de la roue (9,15,26) est inférieur à 40 mm, de préférence inférieur à 30 mm et, encore plus préférablement, inférieur à 20 mm.
